# FASCICULE DE BREVET EUROPEEN

(11) **EP 3 188 952 B1**
(45) Date de publication et mention de la délivrance du brevet: **06.11.2019**
(21) Numéro de dépôt: 15763054.2
(22) Date de dépôt: 26.08.2015
(51) Int. Cl.: B62D 25/08

(54) **ENSEMBLE D'AUVENT POUR VÉHICULE AUTOMOBILE**
VERKLEIDUNGSANORDNUNG FÜR EIN KRAFTFAHRZEUG
COWL ASSEMBLY FOR A MOTOR VEHICLE

(30) Priorité: 04.09.2014 FR 1458275
(43) Date de publication de la demande: 12.07.2017
(73) Titulaire: NOVARES FRANCE, 92140 Clamart (FR)
(72) Inventeur: HUGUET, Guillaume, 01250 Chavannes sur Suran (FR); HAMME, Claude, 01460 Montreal La Cluse (FR); COMBE, Philippe, 01100 Geovreisset (FR)
(74) Mandataire: Delorme, Nicolas
(86) Numéro de dépôt international: PCT/FR2015/052269
(87) Numéro de publication internationale: WO 2016/034793

(56) Documents cités:
- EP-A1- 1 800 998
- EP-A2- 1 321 352
- DE-A1- 10 338 143
- DE-A1-102011 115 592
- FR-A3- 2 926 251
- GB-A- 2 440 101
- US-A1- 2007 246 966

## Description

La présente invention se rapporte à un ensemble d'auvent pour un véhicule ainsi qu'à un véhicule comportant un tel ensemble d'auvent.

De manière conventionnelle, un ensemble d'auvent pour un véhicule comporte :
- une boîte à eau comprenant deux parois latérales, chaque paroi latérale étant destinée à être reliée à un élément de carrosserie du véhicule, tel qu'une doublure d'aile,
- une grille d'auvent surmontant la boîte à eau, et comprenant deux bords latéraux, chaque bord latéral étant relié à une paroi latérale de la boîte à eau.

Par « latérale », on entend une direction s'étendant sensiblement suivant un côté du véhicule.

De plus, dans le présent document, on considère un repère XYZ lié au véhicule, dans lequel : X désigne l'axe longitudinal du véhicule, Y désigne un axe perpendiculaire à X et s'étendant vers un coté du véhicule, et Z désigne un axe perpendiculaire à X et Y s'étendant vers le toit du véhicule.

Selon une architecture classique d'un véhicule, notamment de type automobile, un ensemble d'auvent occupe une zone comprise entre le capot et le pare-brise du véhicule.

La boîte à eau a notamment pour fonction de collecter de l'air à la base du pare-brise du véhicule et de diriger cet air vers l'habitacle du véhicule.

La boîte à eau a également pour fonction de collecter les eaux de ruissellement provenant du pare-brise du véhicule.

Par ailleurs, la boîte à eau peut intégrer d'autres fonctions comme, par exemple, la réception d'un filtre à pollen et/ou d'un réservoir de liquide de lave-glace et/ou une motorisation d'essuie-glace.

La grille d'auvent a notamment pour fonction d'empêcher que des corps étrangers tels que des feuilles mortes pénètrent dans la boîte à eau.

Dans certains ensembles d'auvent connus de l'état de la technique, en particulier dans l'ensemble d'auvent décrit dans la demande de brevet EP 1 321 352, la boite à eau et la grille d'auvent sont assemblées par un profilé de liaison qui comprend une semelle et un joint. Le document DE 103 38 143 A1 décrit également un assemblage d'une grille d'auvent et d'une boîte à eau.

Lors de l'assemblage de la grille d'auvent, l'expérience montre qu'il peut y avoir un risque de déchaussement du profilé de liaison.

Le déchaussement du profilé de liaison peut générer des fuites de liquide issu de la boite à eau, et ainsi endommager des éléments du moteur.

Dans ce contexte technique, la présente invention vise à fournir un ensemble d'auvent qui dispose d'un assemblage pérenne entre la boite à eau et la grille d'auvent.

Selon une définition générale, l'invention propose un ensemble d'auvent pour véhicule automobile, qui comprend :
- une boîte à eau comprenant deux parois latérales et une paroi transversale, chaque paroi latérale étant destinée à être reliée à un élément de carrosserie du véhicule, la paroi transversale s'étendant entre les parois latérales suivant un plan XY par rapport à un repère XYZ lié au véhicule,
- une grille d'auvent surmontant la boite à eau, la grille d'auvent présentant une bordure transversale s'étendant suivant le plan XY par rapport au repère XYZ lié au véhicule,

L'ensemble d'auvent comprend en outre un profilé de liaison qui comprend un élément d'étanchéité et une semelle de fixation. La semelle de fixation présente une paroi supérieure de laquelle s'étendent une lèvre inférieure et une lèvre intermédiaire. La lèvre intermédiaire est positionnée entre la lèvre inférieure et la paroi supérieure. La paroi supérieure et la lèvre intermédiaire délimitent une cavité d'engagement de la grille d'auvent, et la lèvre intermédiaire et la lèvre inférieure délimitent une cavité d'engagement de la boite à eau.

L'utilisation, par le profilé de liaison, d'une semelle présentant deux cavités d'engagement distinctes permet à l'invention de garantir la fixation du profilé de liaison à boite à eau, lors de l'introduction de la grille d'auvent dans la cavité d'engagement de la grille d'auvent.

De plus, la lèvre intermédiaire peut permettre d'augmenter temporairement la pression exercée sur la boite à eau, lors de l'introduction de la grille d'auvent dans la cavité d'engagement de la grille d'auvent.

Ainsi, l'invention fournit un ensemble d'auvent qui dispose d'un assemblage pérenne entre la boite à eau et la grille d'auvent.

En outre, la grille d'auvent peut présenter une nervure qui s'étend dans le plan XZ, et la boite à eau peut présenter une surface transversale de soutien juxtaposée à la paroi transversale. La nervure est conçue pour talonner sur la surface transversale de soutien et piloter l'accostage de la grille d'auvent sur la boite à eau.

La nervure permet de faciliter le positionnement de la grille d'auvent par rapport à la boite à eau. En effet, en appuyant sur la surface transversale de soutien de la boite à eau, la nervure positionne la bordure transversale face à la cavité d'engagement de la grille d'auvent.

Selon un mode de réalisation préférentiel, la lèvre intermédiaire présente une section en forme de L qui comprend une branche sensiblement parallèle à la paroi supérieure et une branche sensiblement perpendiculaire à la paroi supérieure.

La lèvre inférieure présente une section en forme de L qui comprend une branche sensiblement parallèle à la paroi supérieure et une branche sensiblement perpendiculaire à la paroi supérieure. La branche sensiblement perpendiculaire à la paroi supérieure de la lèvre intermédiaire est destinée à servir de butée à un élément encliquetable de la boite à eau.

La forme en L de la lèvre intermédiaire et de la lèvre inférieure, permet à la cavité d'engagement de la boite à eau d'accueillir des moyens d'encliquetage pour fixer la boite à eau dans la cavité d'engagement de la boite à eau.

De plus, la paroi transversale de la boite à eau peut comprendre au moins un harpon conçu pour être encliqueté contre une butée de la cavité d'engagement de la boite à eau.

Ainsi la boite à eau peut aisément être fixée dans la cavité d'engagement de la boite à eau.

En outre, l'élément d'étanchéité peut comprendre au moins un lobe conçu pour s'écraser sous le capot et créer une étanchéité entre la boite à eau et des éléments moteurs.

De manière préférentielle, la bordure transversale peut présenter un chanfrein conçu pour exercer une pression sur la lèvre intermédiaire lors de l'introduction de la grille d'auvent dans la cavité d'engagement de la grille d'auvent.

Selon un mode de réalisation, la branche sensiblement parallèle à la paroi supérieure peut présenter une encoche destinée à recevoir le harpon.

L'encliquetage du harpon dans l'encoche, permet de mettre en position le profilé de liaison sur la boite à eau, avant de fixer définitivement le profilé de liaison en encliquetant le harpon contre la butée.

De manière préférentielle, la semelle de fixation peut comprendre un élément réalisé dans un matériau élastomère présentant une forte pégosité, pour augmenter l'adhérence de la semelle de fixation.

La forte pégosité d'un élément en matériau élastomère compris dans la semelle de fixation, permet de limiter les risques de glissement lors de l'assemblage de la semelle de fixation.

Par ailleurs, la présente invention concerne aussi un véhicule automobile qui comprend un ensemble d'auvent selon l'invention.

D'autres caractéristiques et avantages se dégageront de la description qui va suivre en regard des dessins annexés qui représentent, à titre d'exemple non limitatif, une forme de réalisation de l'invention.
- La figure 1 est une vue en perspective d'un ensemble d'auvent selon l'invention ;
- La figure 2 est une vue en coupe selon de l'ensemble d'auvent, selon le plan II-II de la figure 1 ;
- La figure 3 est une vue en coupe schématique, selon le plan II-II de la figure 1, de l'assemblage de l'ensemble d'auvent selon l'invention, selon une variante ;
- Les figures 4, 5 et 6 sont des vues de dessus schématiques de l'assemblage de l'ensemble d'auvent selon l'invention.

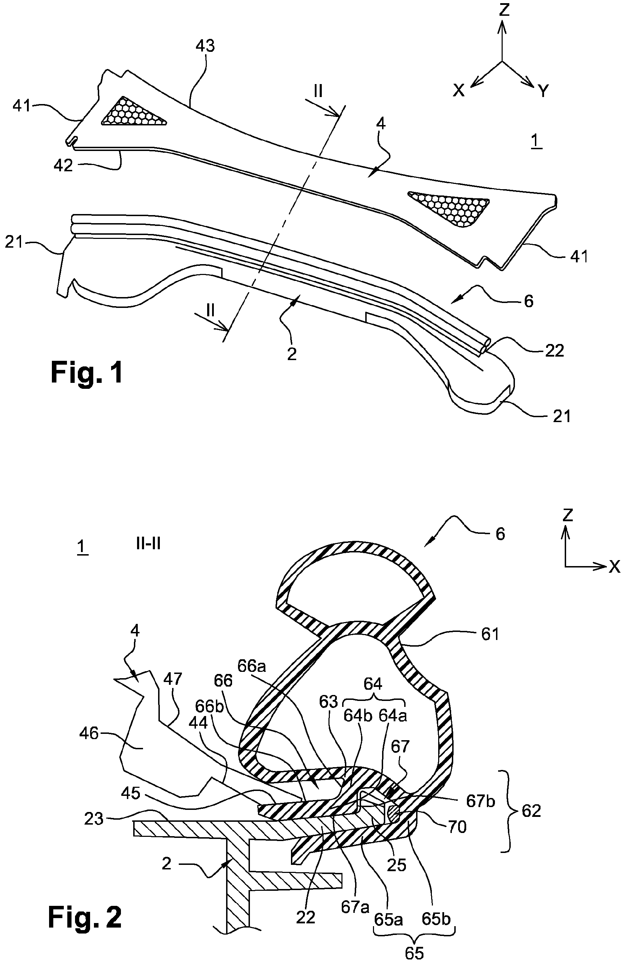

L'ensemble d'auvent 1 illustré sur les figures 1 et 2 comprend : une boite à eau 2, une grille d'auvent 4 et un profilé de liaison 6.

La boite à eau 2 comprend deux parois latérales 21 et une paroi transversales 22. Chaque paroi latérale 21 est destinée à être reliée à un élément de carrosserie, tel qu'une doublure d'aile, d'un véhicule (non représenté). La paroi transversale 22 s'étend dans un plan XY par rapport au repère XYZ lié au véhicule.

La grille d'auvent 4 est conçue pour surmonter la boite à eau 2. La grille d'auvent 4 comprend deux bords latéraux 41 reliés entre eux par une bordure transversales 42 et une bordure de liaison au pare-brise 43.

Le profilé de liaison 6 est destiné à garantir l'assemblage de la boite à eau 2 et la grille d'auvent 4. De plus, le profilé de liaison 6 est aussi destiné à s'écraser sous une portion de capot (non représenté) du véhicule et à assurer l'étanchéité entre la boite à eau 2 et des éléments moteurs.

Comme on peut l'observer sur la figure 2, le profilé de liaison 6 présente un profil comprenant un élément d'étanchéité 61 et une semelle de fixation 62.

Selon le mode de réalisation ici présenté, l'élément d'étanchéité 61 comprend deux lobes souples.

A l'usage, l'élément d'étanchéité 61 s'écrase sous le capot du véhicule, et permet d'assurer l'étanchéité entre la boite à eau 2 et certains éléments moteurs.

De plus, le corps creux permet d'absorber certaines vibrations et ondes sonores provenant des éléments moteurs.

L'élément d'étanchéité 61 est réalisé dans un élastomère souple.

Comme on peut l'apprécier sur la figure 2, la semelle de fixation 62 comprend une paroi supérieure 63 de laquelle s'étendent une lèvre inférieure 65 et une lèvre intermédiaire 64.

La lèvre intermédiaire 64 est positionnée entre la paroi supérieure 63 et la lèvre inférieure 65.

La paroi supérieure 63 et la lèvre intermédiaire 64 délimitent une cavité d'engagement 66 de la grille d'auvent 4.

La lèvre intermédiaire 64 et la lèvre inférieure 65 délimitent une cavité d'engagement 67 de la boite à eau 2.

De plus, comme on peut notamment l'apprécier sur la figure 2, la lèvre intermédiaire 64 et la lèvre inférieure 65 présentent chacune sensiblement une forme en L.

Ainsi, la lèvre intermédiaire 64 comprend une branche sensiblement parallèle 64a à la paroi supérieure 63 et une branche sensiblement perpendiculaire 64b à la paroi supérieure 63.

De même, la lèvre inférieure 65 comprend une branche sensiblement parallèle 65a à la paroi supérieure 63 et une branche sensiblement perpendiculaire 65b à la paroi supérieure 63.

Ainsi, la lèvre intermédiaire 64 définit d'une part, un fond 66a de la cavité d'engagement 66 de la grille d'auvent 4 et une surface inférieure 66b de la cavité d'engagement 66 de la grille d'auvent 4.

Selon un mode de réalisation un élément 70, réalisé dans un matériau élastomère présentant une forte pégosité, peut être positionné dans la cavité d'engagement 66 pour limiter le glissement de la semelle 62 lors de l'engagement de la boite à eau 2.

D'autre part, la lèvre intermédiaire définit une surface supérieure 67a de la cavité d'engagement 67 de la boite à eau 2 et une butée 67b de la cavité d'engagement 67 de la boite à eau 2.

Il est notable que la butée 67b est sensiblement perpendiculaire à la surface supérieure 67a.

Comme cela sera détaillé par la suite, cette disposition technique permet de garantir la pérennité de l'assemblage de l'ensemble d'auvent 1.

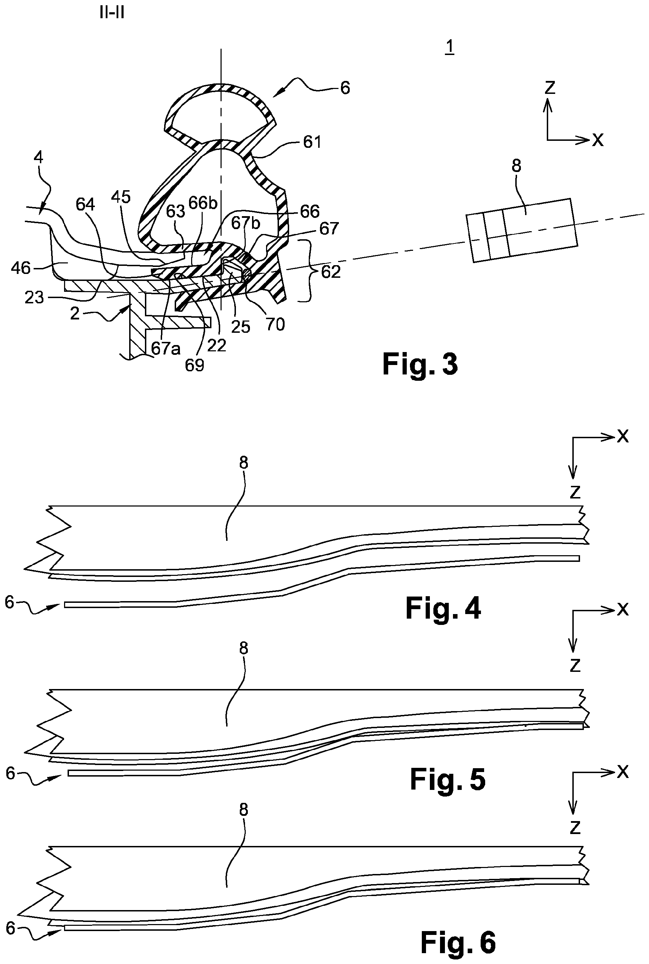

En outre, selon le mode de réalisation illustré sur la figure 3, la surface supérieure 67a de la cavité d'engagement 67 de la boite à eau 2 peut présenter une encoche 69.

L'encoche 69 est destinée à la mise en position du profilé de liaison 6 par rapport à la boite à eau 2.

Tel que cela est représenté sur la figure 2, la boite à eau présente une surface transversale de soutien 23 contigüe de la paroi transversale 22.

La surface transversale de soutien 23 et la paroi transversale 22 présentent une surface sensiblement plane dans le plan XY.

De plus, un harpon 25 est positionné à l'extrémité de la paroi transversale 22.

Le harpon 2 présente une rampe et une surface perpendiculaire à la paroi transversale 22.

La surface perpendiculaire du harpon 25 ayant une fonction d'anti-retour.

Selon un mode de réalisation préférentiel, le harpon 25 s'entend de manière continue le long de la paroi transversale 22.

Le harpon 25 est conçu pour être encliqueté dans la cavité d'engagement 67 de la boite à eau 2, contre la butée 67b.

Il est remarquable sur la figure 2 que la bordure transversale 42 de la grille d'auvent 4 présente une portion supérieure 47 sensiblement plane et une portion inférieure 44.

L'extrémité de la portion inférieure 44 comprend un chanfrein 45.

De plus, une nervure 46 est juxtaposée à la portion inférieure 44.

Selon un mode de réalisation préférentiel, la nervure 46 présente une cote supérieure ou égale à l'épaisseur de la lèvre intermédiaire 64.

L'assemblage de l'ensemble d'auvent 1 est détaillé sur les figures 2 à 6.

La présente description de l'assemblage de l'ensemble d'auvent 1 part d'une situation dans laquelle la boite à eau 2 est fixée au véhicule.

Le profilé de liaison 6 est positionné pour que la cavité d'engagement 67 de la boite à eau 2 reçoive la paroi transversale 22.

Puis, le harpon 25 est encliqueté contre la butée 67b de la cavité d'engagement 67 de la boite à eau 2.

La grille d'auvent 4 est ensuite positionnée par rapport à la boite à eau 2 et au profilé de liaison 6.

Tel que cela est représenté sur la figure 2, l'extrémité de la bordure transversale 42 est introduite dans la cavité d'engagement 66 de la grille d'auvent 4, pour que le chanfrein 45 exerce une pression sur la lèvre intermédiaire 64.

Il s'agit là d'une disposition particulièrement avantageuse de l'invention. En effet, la pression exercée sur la lèvre intermédiaire 64 augmente le contact entre la surface supérieure 67a de la cavité d'engagement 67 de la boite à eau 2 et la paroi transversale 22.

En d'autres termes, la pression exercée par le chanfrein 45 sur la lèvre intermédiaire 64 accentue le maintien de la paroi transversale 22 dans la cavité d'engagement 67 de la boite à eau 2.

La grille d'auvent 4 est ensuite basculée, pour l'amener dans la position représentée sur la figure 3.

Ainsi, la bordure transversale 42 pénètre progressivement dans la cavité d'engagement 66 de la grille d'auvent 4.

Lors de l'avancée de la bordure transversale 42 dans la cavité d'engagement 66 de la grille d'auvent 4, la friction du chanfrein 45, et de la portion inférieure 44, augmente la pression de la surface supérieure 67a et de la butée 67b sur la paroi transversale 22 et sur le harpon 25.

Le basculement de la grille d'auvent 4 est arrêté lorsque la nervure 46 talonne sur la surface transversale de soutien 23 de la boite à eau 2.

La grille d'auvent 4 est ensuite avancée pour terminer l'introduction de la bordure transversale 42 dans la cavité d'engagement 66 de la grille d'auvent 4.

Comme on peut le remarquer sur la figure 1, la bordure transversale 42 et la paroi transversale 22 présentent des profils curvilignes dans le plan XY.

Les profils de la paroi transversale 22 et de la bordure transversale 42 peuvent engendrer quelques variations du positionnement de la paroi transversale 22, et de la bordure transversale 42, respectivement dans la cavité d'engagement 67 de la boite à eau 2 et dans la cavité d'engagement 66 de la grille d'auvent 2.

Selon le mode de réalisation présenté sur la figure 3, le harpon 25 peut tout d'abord être encliqueté dans l'encoche 69, pour assister la mise en position du profilé de liaison 6.

Puis, un effort peut être exercé sur le profilé de liaison 6 pour encliqueter le harpon 25 conte la butée 67b.

Pour garantir l'homogénéité de la position de la paroi transversale 22 dans la cavité d'engagement 67 de la boite à eau 2, et de la position de la bordure transversale 42 dans la cavité d'engagement 66 de la grille d'auvent 4, un gabarit 8 de mise en position peut être utilisé.

Tel que cela est représenté sur les figures 3 à 6, le gabarit 8 peut présenter un profil complémentaire du profil de la bordure transversale 42 et de la paroi transversale 22.

Le gabarit 8 peut être progressivement positionné contre le profilé de liaison 6 pour forcer l'introduction complète de la paroi transversale 22 dans la cavité d'engagement 67 de la boite à eau 2, et l'introduction complète de la bordure transversale 42 dans la cavité d'engagement 66 de la grille d'auvent 4.

De plus, selon un mode de réalisation, une roulette peut être positionnée contre la semelle 62. La roulette peut être déplacée le long d'une surface de la semelle 62 pour forcer l'introduction complète de la paroi transversale 22 dans la cavité d'engagement 67 de la boite à eau 2, et l'introduction complète de la bordure transversale 42 dans la cavité d'engagement 66 de la grille d'auvent 4.

Ainsi, l'invention propose un ensemble d'auvent qui dispose d'un assemblage pérenne entre la boite à eau et la grille d'auvent, notamment permis par l'usage de deux cavités d'engagement superposées.

Bien entendu, l'invention n'est nullement limitée au mode de réalisation décrit ci-dessus et illustré par les différentes figures, ce mode de réalisation n'ayant été donné qu'à titre d'exemple.

Des modifications restent possibles, notamment du point de la constitution des divers éléments sans pour autant sortir du domaine de l'invention déterminée par les revendications.

## Revendications

1. Ensemble d'auvent (1) pour véhicule automobile, qui comprend :
- une boîte à eau (2) comprenant deux parois latérales (21) et une paroi transversale (22), chaque paroi latérale (21) étant destinée à être reliée à un élément de carrosserie du véhicule, la paroi transversale (22) s'étendant entre les parois latérales (21) suivant un plan XY par rapport à un repère XYZ lié au véhicule,
- une grille d'auvent (4) surmontant la boite à eau (2), la grille d'auvent (4) présentant une bordure transversale (42) s'étendant suivant le plan XY par rapport au repère XYZ lié au véhicule,
**caractérisé en ce que** l'ensemble d'auvent (1) comprend, en outre, un profilé de liaison (6) comprenant un élément d'étanchéité (61) et une semelle de fixation (62), la semelle de fixation (62) présentant une paroi supérieure (63) de laquelle s'étendent une lèvre inférieure (65) et une lèvre intermédiaire (64), la lèvre intermédiaire (64) étant positionnée entre la lèvre inférieure (65) et la paroi supérieure (63), la paroi supérieure (63) et la lèvre intermédiaire (64) délimitant une cavité d'engagement (66) de la grille d'auvent (4), et la lèvre intermédiaire (64) et la lèvre inférieure (65) délimitant une cavité d'engagement (67) de la boite à eau (2).

2. Ensemble d'auvent (1) selon la revendication 1, **caractérisé en ce que** la grille d'auvent (4) présente une nervure (46) s'étendant dans le plan XZ, et la boite à eau (2) présente une surface transversale de soutien (23) juxtaposée à la paroi transversale (22), la nervure (46) étant conçue pour talonner sur la surface transversale de soutien (23) et piloter l'accostage de la grille d'auvent (4) sur la boite à eau (2).

3. Ensemble d'auvent (1) selon la revendication 1 ou la revendication 2, **caractérisé en ce que** la lèvre intermédiaire (64) présente une section en forme de L comprenant une branche sensiblement parallèle (64a) à la paroi supérieure (63) et une branche sensiblement perpendiculaire (64b) à la paroi supérieure (63), et la lèvre inférieure (65) présente une section en forme de L comprenant une branche sensiblement parallèle (65a) à la paroi supérieure (63) et une branche sensiblement perpendiculaire (65b) à la paroi supérieure (63), la branche sensiblement perpendiculaire (64b) à la paroi supérieure (63) de la lèvre intermédiaire (64) étant destinée à servir de butée (67b) à un élément encliquetable de la boite à eau (2).

4. Ensemble d'auvent (1) selon la revendication 3, **caractérisé en ce que** la paroi transversale (22) de la boite à eau (2) comprend au moins un harpon (25) conçu pour être encliqueté dans la cavité d'engagement (67) de la boite à eau (2) contre la butée (67b).

5. Ensemble d'auvent (1) selon l'une des revendications 1 à 4, **caractérisé en ce que** l'élément d'étanchéité (61) comprend au moins un lobe conçu pour former une étanchéité avec un capot d'un véhicule.

6. Ensemble d'auvent (1) selon l'une des revendications 1 à 5, **caractérisé en ce que** la bordure transversale (42) présente un chanfrein (45) conçu pour exercer une pression sur la lèvre intermédiaire (64) lors de l'introduction de la grille d'auvent (4) dans la cavité d'engagement (66) de la grille d'auvent (4)

7. Ensemble d'auvent (1) selon l'une des revendications 4 à 6, **caractérisé en ce que** la branche sensiblement parallèle à la paroi supérieure (63) présente un encoche (69) destinée à recevoir le harpon (25).

8. Ensemble d'auvent (1) selon l'une des revendications 1 à 7, **caractérisé en ce que** la semelle de fixation (62) comprend un élément (70) réalisé dans matériau élastomère présentant une forte pégosité, pour augmenter l'adhérence de la semelle de fixation (62).

9. Véhicule automobile **caractérisé en ce qu'**il comprend un ensemble d'auvent (1) selon l'une des revendications 1 à 8.

## Patentansprüche

1. Windlaufanordnung (1) für ein Kraftfahrzeug, die umfasst:
- einen Wasserkasten (2), umfassend zwei Seitenwände (21) und eine Querwand (22), wobei jede Seitenwand (21) dazu bestimmt ist, mit einem Karosserieelement des Fahrzeugs verbunden zu werden, wobei sich die Querwand (22) entlang einer Ebene XY in Hinblick auf ein auf das Fahrzeug bezogenes Bezugssystem XYZ zwischen den Seitenwänden (21) erstreckt,
- ein Windlaufgitter (4), welches über den Wasserkasten (2) übersteht, wobei das Windlaufgitter (4) eine Quereinfassung (42) aufweist, welche sich entlang der Ebene XY in Hinblick auf ein auf das Fahrzeug bezogenes Bezugssystem XYZ erstreckt,
**dadurch gekennzeichnet, dass** die Windlaufanordnung (1) weiter ein Verbindungsprofil (6) umfasst, welches ein Dichtungselement (61) und eine Fixierleiste (62) umfasst, wobei die Fixierleiste (62) eine obere Wand (63) aufweist, aus der sich eine untere Lippe (65) und eine Zwischenlippe (64) erstrecken, wobei die Zwischenlippe (64) zwischen der unteren Lippe (65) und der oberen Wand (63) positioniert ist, wobei die obere Wand (63) und die Zwischenlippe (64) einen Eingriffshohlraum (66) des Windlaufgitters (4) eingrenzen, und die Zwischenlippe (64) und die untere Lippe (65) einen Eingriffshohlraum (67) des Wasserkastens (2) eingrenzen.

2. Windlaufanordnung (1) nach Anspruch 1, **dadurch gekennzeichnet, dass** das Windlaufgitter (4) eine Rippe (46) aufweist, die sich über die Ebene XZ erstreckt, und der Wasserkasten (2) eine querlaufende Stützoberfläche (23) aufweist, die neben der Querwand (22) gelegen ist, wobei die Rippe (46) gestaltet ist, um auf der querlaufenden Stützoberfläche (23) aufzusitzen und das Anlegen des Windlaufgitters (4) an dem Wasserkasten (2) zu lenken.

3. Windlaufanordnung (1) nach Anspruch 1 oder Anspruch 2, **dadurch gekennzeichnet, dass** die Zwischenlippe (64) einen Querschnitt in Form eines L aufweist, einen zu der oberen Wand (63) im Wesentlichen parallelen Schenkel (64a), und einen zu der oberen Wand (63) im Wesentlichen senkrechten Schenkel (64b) umfassend, und die untere Lippe (65) einen Querschnitt in Form eines L aufweist, einen zu der oberen Wand (63) im Wesentlichen parallelen Schenkel (65a), und einen zu der oberen Wand (63) im Wesentlichen senkrechten Schenkel (65b) umfassend, wobei der zu der oberen Wand (63) im Wesentlichen senkrechte Schenkel (64b) der Zwischenlippe (64) dazu bestimmt ist, als Anschlag (67b) für ein einrastbares Element des Wasserkastens (2) zu dienen.

4. Windlaufanordnung (1) nach Anspruch 3, **dadurch gekennzeichnet, dass** die Querwand (22) des Wasserkastens (2) mindestens einen Haken (25) umfasst, der gestaltet ist, um in den Eingriffshohlraum (67) des Wasserkastens (2) gegen den Anschlag (67b) eingerastet zu werden.

5. Windlaufanordnung (1) nach einem der Ansprüche 1 bis 4, **dadurch gekennzeichnet, dass** das Dichtungselement (61) mindestens einen Lappen umfasst, der gestaltet ist, um eine Dichtung mit einer Motorhaube eines Fahrzeugs zu bilden.

6. Windlaufanordnung (1) nach einem der Ansprüche 1 bis 5, **dadurch gekennzeichnet, dass** die Quereinfassung (42) eine Fase (45) aufweist, die gestaltet ist, um beim Einführen des Windlaufgitters (4) in den Eingriffshohlraum (66) des Windlaufgitters (4) einen Druck auf die Zwischenlippe (64) auszuüben.

7. Windlaufanordnung (1) nach einem der Ansprüche 4 bis 6, **dadurch gekennzeichnet, dass** der zu der oberen Wand (63) im Wesentlichen parallele Schenkel eine Auskerbung (69) aufweist, die dazu bestimmt ist, den Haken (25) aufzunehmen.

8. Windlaufanordnung (1) nach einem der Ansprüche 1 bis 7, **dadurch gekennzeichnet, dass** die Fixierleiste (62) ein Element (70) umfasst, das aus einem Elastomer-Material realisiert ist, das eine starke Klebrigkeit aufweist, um die Haftung der Fixierleiste (62) zu erhöhen.

9. Kraftfahrzeug, **dadurch gekennzeichnet, dass** es eine Windlaufanordnung (1) nach einem der Ansprüche 1 bis 8 umfasst.

## Claims

1. A cowl assembly (1) for a motor vehicle, which comprises:
- a water box (2) comprising two lateral walls (21) and a transverse wall (22), each lateral wall (21) being intended to be connected to a body element of the vehicle, the transverse wall (22) extending between the lateral walls (21) along a plane XY relative to a reference XYZ related to the vehicle,
- a cowl vent grille (4) surmounting the water box (2), the cowl vent grille (4) having a transverse border (42) extending along the plane XY relative to the reference XYZ related to the vehicle,
**characterized in that** the cowl assembly (1) further comprises a connection profile (6) comprising a sealing element (61) and a fastening sole plate (62), the fastening sole plate (62) having an upper wall (63) from which extend a lower lip (65) and an intermediate lip (64), the intermediate lip (64) being positioned between the lower lip (65) and the upper wall (63), the upper wall (63) and the intermediate lip (64) delimiting a cavity for engaging (66) the cowl vent grille (4), and the intermediate lip (64) and the lower lip (65) delimiting a cavity for engaging (67) the water box (2).

2. The cowl assembly (1) according to claim 1, **characterized in that** the cowl vent grille (4) has a rib (46) extending in the plane XZ, and the water box (2) has a transverse support surface (23) juxtaposed to the transverse wall (22), the rib (46) being adapted to hound on the transverse support surface (23) and control the docking of the cowl vent grille (4) on the water box (2).

3. The cowl assembly (1) according to claim 1 or claim 2, **characterized in that** the intermediate lip (64) has an L-shaped section comprising a branch substantially parallel (64a) to the upper wall (63) and a branch substantially perpendicular (64b) to the upper wall (63), and the lower lip (65) has an L-shaped section comprising a branch substantially parallel (65a) to the upper wall (63) and a branch substantially perpendicular (65b) to the upper wall (63), the branch (64b) substantially perpendicular to the upper wall (63) of the intermediate lip (64) being intended to serve as a stop (67b) to a snap-on element of the water box (2).

4. The cowl assembly (1) according to claim 3, **characterized in that** the transverse wall (22) of the water box (2) comprises at least one harpoon (25) adapted to be snap-fitted into the cavity for engaging (67) the water box (2) against the stop (67b).

5. The cowl assembly (1) according to any of claims 1 to 4, **characterized in that** the sealing element (61) comprises at least one lobe adapted to form a sealing with a hood of a vehicle.

6. The cowl assembly (1) according to any of claims 1 to 5, **characterized in that** the transverse border (42) has a chamfer (45) adapted to exert a pressure on the intermediate lip (64) during the introduction of the cowl vent grille (4) into the cavity for engaging (66) the cowl vent grille (4).

7. The cowl assembly (1) according to any of claims 4 to 6, **characterized in that** the branch substantially parallel to the upper wall (63) has a notch (69) intended to receive the harpoon (25).

8. The cowl assembly (1) according to any of claims 1 to 7, **characterized in that** the fastening sole plate (62) comprises an element (70) made of elastomeric material having a high tack, in order to increase the adhesion of the fastening sole plate (62).

9. A motor vehicle **characterized in that** it comprises a cowl assembly (1) according to any of claims 1 to 8.
